# EUROPEAN PATENT SPECIFICATION

(11) **EP 2 609 037 B1**
(45) Date of publication and mention of the grant of the patent: **04.06.2014**
(21) Application number: 11738242.4
(22) Date of filing: 02.08.2011
(51) Int. Cl.: C02F 1/00, C02F 1/68, C02F 1/76, C02F 1/28, C02F 1/44

(54) **WATER PURIFICATION DEVICE COMPRISING A GRAVITY-FED FILTER**
WASSERREINIGUNGSGERÄT MIT SCHWERKRAFTGESPEISTEM FILTER
DISPOSITIF D'ÉPURATION D'EAU COMPRENANT UN FILTRE ALIMENTÉ PAR GRAVITÉ

(30) Priority: 06.10.2010 EP 10186679; 24.08.2010 IN MU23602010
(43) Date of publication of application: 03.07.2013
(73) Proprietor: Unilever N.V., 3013 AL Rotterdam (NL); Unilever PLC, London, Greater London EC4P 0DY (GB)
(72) Inventor: MISTRY, Mahendrakumar, Maganlal, Andheri East Mumbai 400 099 (IN); MUKHERJEE, Nikhileshwar, Andheri East Mumbai 400 099 (IN); SRIVASTAVA, Madalasa, Andheri East Mumbai 400 099 (IN)
(74) Representative: Rosen Jacobson, Frans Lucas M.
(86) International application number: PCT/EP2011/063282
(87) International publication number: WO 2012/025343

(56) References cited:
- EP-A1- 1 354 857
- WO-A1-2007/000238
- WO-A1-2010/034687
- WO-A2-92/16272
- WO-A2-2004/074182

## Description

### FIELD OF INVENTION

The present invention relates to water purification devices, particularly to gravity-fed water purification devices that operate without electricity and pressurised water, but the invention may also be applicable to devices using electricity and pressurised water.

### BACKGROUND AND RELATED ART

Any discussion of the prior art throughout the specification should in no way be considered as an admission that such prior art is widely known or forms part of the common general knowledge in the field.

Various types of water purification devices have been described in literature, especially patents, and several models are also available in markets. Some need electricity to function; examples include ultra violet (UV) based purifiers. Some purifiers do not need electricity to function. Such purifiers are also known as gravity-fed water purifiers. A candle filter is an example of a conventional gravity-fed purifier. Nowadays, candle filters have been replaced by modern, 3-stage and 4-stage purifiers. One such purifier has been described in WO2004/000732 A1 (Unilever). In such purifiers, the pressure exerted by the height of the column of water (also known as "head height") in a top chamber, makes the water flow through various filtration stages in the lower chambers.

A typical household gravity-fed water purifier has three chambers; a top chamber, a middle chamber and a bottom chamber. The top chamber is generally used for pre-filtration. Usually it has a sediment filter, such as a non-woven media or woven filter media, which traps some of the macroscopic impurities such as particles of dust and mud. The top chamber usually also has a carbon filter, either in the form of loose granules, or in the form of a compacted carbon block. The carbon filter helps trap organic impurities, chemicals, and malodorous compounds. Some carbon filters also filter out microorganisms, called cysts, which are Protozoans. Examples include *Cryptosporidium parvum* and *Giardia lamblia.* Cysts are larger than bacteria and viruses. The middle chamber is generally used for disinfection of water. Some modern filters, such as the one described in WO2004/000732 A1 (Unilever) also uses a chemical purification agent, better known as biocide. An agent of choice is Chlorine, generally in the form of tablets of TCCA (Tri Chloro Cyanuric Acid). Such tablets gradually release chlorine in water and the biocide kills most of the bacteria and viruses. The biocide is generally housed inside a cartridge. The cartridge uses a precisely engineered chlorine (or other halogen) dispensing mechanism for dosing controlled amount of chlorine (or other halogen) into water.

WO2004/000732 A1 also discloses that it is essential that once the water has flown through the chemical purifying agent, there should be a predetermined residence time so as to ensure effective microbiological kill. The Application also discloses that after the chemical purifying agent has acted to make the water microbiologically pure, any excess chemical purifying agent or by-products thereof is removed by passing the water through a scavenger filter made up of activated carbon.

One of the problems of gravity-fed water purification devices is that the output flow rate depends on the head of water column available to the filter. The flow rate reduces significantly with the falling head of input water as the filtration progresses. This problem with lower flow rate may become a source of major inconvenience and irritation for consumers as the filter begins to choke with use.

WO2008/028734 A1 (Unilever) describes a filtration system consisting of combination of pleated layer and non pleated layer of filtration medium. This Application describes that the flow rate is a function of head height which is not constant. The head of water feeding into the sediment filter changes with rise and fall of the head of water. The available surface area for filtration also changes with rise and fall of water level surrounding the sediment filter. When the level of water goes below the height of the sediment filter a part of the sediment filter surface rises above water level and then it does not contribute to filtration.

WO9216272A (Scheurer, Anna), discloses a filter suitable for filtration of various materials and is useful for both liquids as well as gaseous media. The filter has a filter casing in which there is at least one filter cartridge. In the cartridge casing at least one separating wall forms at least two filter chambers arranged mutually coaxially, through which the medium to be cleaned passes in succession. This one cartridge casing may be secured to a further cartridge casing via a casing connector. In this invention the walls relate to forming filter chambers and to enable filling these with different filter beds for purification of respective media.

WO07000238A (Unilever), discloses a unit-dose disintegrating and dispensing device for dispensing disinfectant in water, comprising a container having a base provided with a unit-dose dispensing aperture, a plurality of tabs disposed below said aperture, said tabs being capable of supporting a unit-dose and a cam-operated unit-dose disintegrating and dispensing mechanism disposed in said container. It relates to dose disintegrating and dispensing a unit-dose of a disinfectant to a batch of water. It does not disclose how to deliver purified water at a comparatively constant flow-rate, while ensuring sufficient residence time for a chemical purifying agent to act on the water to be purified, so that output water is microbiologically safe for drinking.

WO10034687A (Unilever), discloses a gravity fed water purification device comprising a biocide unit, a reservoir separated by a wall from and positioned adjacently to a scavenger comprising a media capable of scavenging said biocide or byproducts thereof from water and a dispensing chamber interconnected to define a flow path where the biocide is added by the biocide unit to the water in the reservoir which flows over the wall into the scavenger and through an outlet to the dispensing chamber, and, the outlet is positioned such that at least 10 percent by weight of said media is below the lowest level of the outlet, and the wall extends above the highest level of the media and above the lowest level of the outlet. In this construction it is essential to have at least 10% of the filter media below the lowest level of the outlet and the wall to extend above the highest level of the filter media.

By way of the present invention it has been possible to provide a gravity-fed water purification device which can deliver purified water at a comparatively constant flow-rate, while ensuring sufficient residence time for a chemical purifying agent to act on the water to be purified, so that output water is microbiologically safe for drinking.

### OBJECT OF THE INVENTION

One of the objects of this invention is to provide a gravity-fed water purification device which can deliver purified water at a comparatively constant flow rate.

Another object of the present invention is to provide residence time where the chemical purifying agent e.g. halogen based (strong oxidising compounds) dosed into the water to be purified is kept in contact with the water for a predetermined time thereby precipitating many inorganic impurities. This also provides sufficient contact time between the pathogens in water and the chemical purifying agent for ensuring effective and high microbiological purity.

### STATEMENT OF THE INVENTION

The inventors have found that the problems may be solved when in a gravity-fed water purification device, the chamber that has the sediment filter, also has a compartment that surrounds the sediment filter. The compartment has sidewalls rising upwardly from bottom of the chamber to define an open top with a rim having a notch. The compartment is spaced apart from the walls of the chamber to define a space around the compartment. Preferred devices were surprisingly found to solve the problem of tapering-off of the flow-rate from the device over a period of use, and the need to frequently back wash the carbon block filter, particularly under conditions of poor water quality.

In particular, the present inventors have found that by providing a compartment that has a notch at its open end it is possible to provide for adjustment of the driving head and ensure constant flow rate. By such a configuration is also possible to ensure that sufficient residence time is provided for the chemical purifying agent to act and thus obtain output water that is microbiologically safe for drinking. It is ensured that the water is purified so that 6 log removal of bacteria, 4 log removal of viruses and 3 log removal of cysts is achieved.

### SUMMARY OF THE INVENTION

The invention provides a water purification device having a chamber defined by walls, the chamber having:
(i) an inlet;
(ii) an outlet; and
(iii) a sediment filter in fluid communication with said inlet and outlet and located there between;
   wherein said sediment filter is surrounded by
(iv) a compartment having sidewalls rising upwardly from bottom of the chamber to define an open top with a rim, said compartment being spaced apart from the walls of the chamber to define a space around said compartment;
   characterised in that the rim of the open top of the compartment comprises a notch.

In this description, the word "compartment" will be used to describe the immediate housing which surrounds the sediment filter. The outer container which houses the compartment will be described as "chamber".

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### DETAILED DESCRIPTION

The invention provides a water purification device having a chamber defined by walls, the chamber having:
(i) an inlet;
(ii) an outlet; and
(iii) a sediment filter in fluid communication with said inlet and outlet and located therebetween;
   wherein said sediment filter is surrounded by
(iv) a compartment having sidewalls rising upwardly from bottom of the chamber to define an open top with a rim, said compartment being spaced apart from the walls of the chamber to define a space around said compartment;
   characterised in that the rim of the open top of the compartment comprises a notch.

This chamber forms one of the chambers of the water purification device. It is preferred that the device has a top chamber, a middle chamber and a bottom chamber, and it is preferred that the chamber (having the sediment filter and the compartment) is the middle chamber. The device may also have only two chambers, in which case, the chamber may be placed either at the top or the bottom, preferably the top. It is also possible that the device has only this chamber. The chambers may be fixedly connected to each other, such as by forming the water purification device as a single integrally moulded device. The chambers may also be detachably connected to each other. This allows for periodic cleaning of any chamber, or filters contained therein. In such a case, the individual chambers may be fitted to each other by any known means, such as by means of press-fit joints or any other coupling joints. Such joints may also reduce leakage of water. All chambers have an inlet and an outlet.

The sediment filter could be any appropriate means for removal of suspended particulate materials. The sediment filter may be made of woven or non-woven fabric. In this case; non-woven fabric is preferred over woven fabric. The fabric used to make the sediment filter could be natural or synthetic, preferably synthetic. The fabric may be made of a polymer, preferably a thermoplastic polymer. Suitable polymers include polyester, polypropylene and nylon. Polyester is the material of choice. The sediment filter helps trap suspended solids having a particle size ranging from 1 to 10 µm.

It is preferred that the sediment filter defines a symmetrical cross-section, such as square, rectangular, triangular, circular, or hexagonal section. Cylindrical sediment filters are preferred over others. Such filters define circular cross-section. When the filter is configured as a cylinder, the height of the cylinder may be 2 cm to 50 cm and the diameter of the cylinder may be from 1 cm to 50 cm. These dimensions are limited by the dimensions of the chamber housing it. The sediment filter is affixed to the bottom of the chamber, and is inside the compartment. The sediment filter may be affixed to the bottom of the chamber by any known means, such as through press-fit joint, or screw-fit joint, or twist and fix joints. It is preferred that the sediment filter is detachably attached, so that it may be cleaned (rejuvenated), if need be. The sediment filter may be rejuvenated easily by washing in flowing water, and this may increase the life of the filter. The flow-rate of water may increase after each such rejuvenation.

It is preferred that the sediment filter is mounted on a cage, preferably of plastic, so that the filter may remain firm, and may not collapse due to the pressure exerted by the column of water.

The sediment filter may have single or multiple layers of pleated or non-pleated fabrics. The sediment filter may have plurality of pleats, and this is preferred. Pleats increase its surface area, which in turn is linked to the area available for filtration. While it is preferred that a singular sediment filter is used, the chamber may also have plurality of cylindrical sediment filters, where at least one filter media has plurality of pleats. Preferably, the number of non-pleated filters is 1 to 10, while the number of pleated filters is also 1 to 10. Optimal performance is obtained when the number of non-pleated filters is 1 to 5 and the number of pleated filters is 1 to 5. Preferably, the thickness of the pleated sediment filter is 0.5 mm to 15 mm, more preferably at least 1 mm to 8 mm, and most preferably at least 1 mm to 6 mm. Preferably, thickness of the non-pleated sediment filter is 0.5 mm to 15 mm, more preferably 1 mm to 10 mm, and most preferably 1 mm to 6 mm. It is preferred that layers of the sediment filters are concentrically arranged. They may also be spirally wound.

The sediment filter may be placed in any orientation, but is preferred that it is placed in the upright manner inside the chamber. Preferred embodiments of the invention allow for making use of sediment filters having surface area about 300 to 1000 cm², but filters with area up to 3000 cm² may also be used.

It is preferred that the compartment and the sediment filter are coaxial, but not essential. The compartment is defined by side-walls. The side-walls rise upwardly from bottom of the chamber to define an open top with a rim having a notch. This compartment encircles the sediment filter, leaving the top open. The compartment may define a symmetrical cross-section. Alternatively, the compartment may define an asymmetrical cross-section. The height of the compartment is such that it can provide necessary head to the sediment filter to achieve the target flow rate until the sediment filter has no surface to filter water. Alternatively, the ratio of height of the compartment to the height of the sediment filter media is preferably 1:1 to 1.5:1. The height of the compartment may also be preferably within +/- 60 % of the height of the sediment filter. The ratio of width of the compartment at the widest part of its base to width of the sediment filter at its base is preferably 1:0.1 to 1:0.9. As the compartment extends upwardly, it may extend outwardly. In this case, the area occupied by the base of the compartment will be smaller than the area defined by its top, and the total volume of the wall may increase. It is preferred that ratio of width of the rim of the compartment to width of the sediment filter at its top is 1:0.05 to 1:0.9.

The rim of the open top of the compartment has a notch through which water flows and collects within the space around the compartment. The function of the notch is to allow the water to flow into the space between the sediment filter and the compartment. It is preferred that the notch is positioned at an end remote from the inlet of the chamber. This may help in providing sufficiently long residence time for the water till it meets the sediment filter. A longer residence time may be beneficial, as dirt, dust and other suspended impurities may be allowed to settle at the bottom of the chamber. This will help reducing particulate load on the sediment filter and thus help prolong the life of the sediment filter, and lesser number of washes may be required. Water enters the chamber through the inlet, which may, for example, be located at the bottom of the chamber, and is preferably in the form of a pipe, and then rises upwards.

It is preferred that the compartment is fused with the wall of the chamber along the height of the compartment and more preferably the compartment is fused with the wall of the chamber along the height of the compartment at the origin point of the notch closest to the inlet. It is preferred that the compartment is fused with the wall of the chamber to the inlet using a weir plate.

The design and capacity of the chamber may allow for no turbulence that may trigger any intermixing of layers of water. Water rises in the chamber from bottom to top following a near ideal plug flow path. Water may stay in the chamber for about 10 to 50 minutes, before it reaches the notch. This may provide sufficient time for sedimentation of impurities at the bottom of the chamber and thereby it may reduce the particulate load on the sediment filter and also on subsequent filtration steps.

Without wishing to be bound by theory, it is believed that as soon as water starts collecting inside the compartment, the process of filtration begins, and the lower radial portion of the sediment filter starts getting utilised for filtration. Over a period, the lower portions may get choked with suspended particulate matter. As this happens, the level of water in the annular space between the compartment and the sediment filter rises, and the loss of surface area due to partial blocking of sediment filter may be compensated by the extra head of water maintaining a constant output of water from the sediment filter. This process continues until the level of water in the chamber and inside the compartment become same. This may happen when there is no surface area available for the sediment filter for filtration. It is preferred that the chamber has one or more floats. At this point the float may get activated to shut the supply of water into the chamber.

The inventors have found that the sediment filter surrounded by a compartment is capable of delivering relatively high flow rate.

The sediment filter may need periodic cleaning. This may be done under a running stream of water. The frequency of cleaning of sediment filter for given quality of water would depend on the surface area provided to the sediment filter and also on the active porosity of the media which may progressively get blocked as the filter media gets used. Preferred devices of the invention may provide a means to carry on filtration indefinitely at comparatively constant flow rate in a gravity-fed water purification device, if the sediment filter is provided with required surface area. Filtration may continue until the choking of surface area of the sediment filter media becomes irreversible. Preferred embodiments may deliver flow rate around 70-80 ml /minute. Without wishing to be bound by theory, it is believed that turbid water (100 NTU) could also be filtered at a reasonably constant flow rate. The sediment filter allows for removal of most of the particulate impurities and supplies clean water at constant flow rate to the subsequent stages of filtration which could be a carbon filter or any other means of filtration which will finally deliver the output water without any major drop in the flow rate.

The capacity of this chamber is preferably about 2.5 litres, but it may be smaller or larger. Sometimes the chamber may collect more water than its designed capacity if the float described above malfunctions for any reason and does not stop supply of water from top chamber to middle chamber. If this happens, in order to guide the overflow, the chamber may have an overflow aperture which is positioned above the notch.

It is preferred that a cartridge having a water-leachable chemical purification agent is fitted to a wall of the chamber, and an outlet of the cartridge is in fluid communication with the chamber. The outlet of the cartridge may communicate with the chamber by any known means. It is preferred that the means is a pipe. The cartridge may contain any conventional purification agent in powder, granular, tablet, or liquid form. Preferred chemical purification agents include pentaiodide resin or any other biocide resin, trichlorocyanuric acid (TCCA), Bromochloro di methyl hydantoin (BCDMH), and a combination of TCCA and BCDMH. It is also possible to use other conventional halogen releasing compounds such as potassium dischloroisocyanurate, sodium dichloroisocyanurate, chlorinated trisodium phosphate, calcium hypochlorite, lithium hypochlorite, monochloramine, dichloramine, [(monotrichloro)-tetra (monopotassium dichloro)] pentaisocyanurate, 1,3 dichloro-5,5- dimethylidanotone, paratoluene sulfodichloroamide, thrichloromelamine, N-chloramine, N-chlorosuccinimide, N, N'-dichloroazodicarbonamide, N-chloroacetyl-urea, N, N-dichloroazodicarbonamide, N-chloroacetyl-urea, N, N, dichlorbiurite, and chlorinated dicyandiamide. TCCA, BCDMH and combination of TCCA and BCDMH are the most preferred water-leachable chemical purification agents and it is especially preferred that the TCCA, BCDMH and combination of TCCA and BCDMH are in the form of a tablet. The cartridge may contain one tablet, or a stack of tablets. Preferably, the cartridge is made in accordance with WO2007/144256 A1 (Unilever).

The cartridge may be fitted externally on a wall of the chamber. In such a case, the chamber has an externally disposed socket with an inner coaxial tube communicating with the interior of the chamber and an inlet of the cartridge, where the cartridge is fitted to the chamber at the socket by means of a complementarily shaped plug, and the plug has a coaxial inner orifice that is shaped to receive the inner coaxial tube of the socket. The outlet of the cartridge is in fluid communication with the inlet of the chamber. The term "fluid", for the purpose of this invention means water. It is highly preferred, but not essential that the water first flows through the cartridge containing the chemical purification agent, before it enters the chamber that has the sediment filter. It is for this reason that the cartridge is preferably placed before (i.e. upstream of) the sediment filter. Preferably, the water that leaves the cartridge is guided to the inlet of the chamber having the sediment filter and the compartment by means of a pipe that opens at the bottom of the chamber. After the water has flown through the cartridge which contains a chemical purification agent, some chemical purification agent leaches into the water. The chemical purification agent acts on microbiological entities, such as bacteria and viruses, and inhibits them. In preferred devices, the water containing leached chemical purification agent is given sufficiently high "residence time", before it contacts the sediment filter. This "residence time" is decided on the basis of concentration of the chemical purification agent, volume of the chamber and flow rate. Some chemical purification agents may require lesser residence time, because they may act relatively faster. Others may require comparatively longer residence time, because they may be act relatively slower. Solubility of the chemical purification agent, temperature of the water, target disinfection of purified water etc, may also be important factors of the residence time.

It is preferred that a relatively longer residence time is achieved by placing the notch, which is located on the rim of the open top of the compartment, away from the inlet of the chamber that has the sediment filter and the compartment which is defined by side-walls. In this manner, water (containing leached chemical purification agent) is made to reside inside the chamber for a relatively longer time, before it contacts the sediment filter.

It is preferred that the chamber has a raised platform housing a water collection tray and an orifice for fluid communication with the biocide cartridge from within the platform, where the raised platform:
(i) is at height higher than the notch and the overflow aperture;
(ii) has its base flush with the bottom of the chamber;
(iii) is fused to a wall of the chamber; and,
(iv) has at least one point of contact with the compartment.

It is also possible that the base is not flush with the bottom of the chamber. In that case, the raised platform will not touch the bottom of the chamber. While it is preferred that there is at least one point of contact between the raised platform and the compartment; the two may also be spaced apart. When the platform and the compartment are in contact it is preferred that it is along the height of the compartment. It is preferred that water flowing out of a top chamber first falls on the raised platform within the water collection tray, and then the water flows into the chemical purification agent inside the cartridge. Treated water exits from the biocide cartridge and is guided to travel at the bottom of the chamber (having the sediment filter and the compartment) before collection of water begins in the chamber. Water follows an upward movement from bottom to top as water collects in the chamber.

Preferably, the chamber has plurality of legs on an outer side opposite its bottom, the legs being positioned towards the extremities of the chamber. In a preferred embodiment, there are four legs.

The water purification device preferably includes a carbon block filter in fluid communication with the sediment filter, such that water flows through the carbon block filter after it has flown through the sediment filter. It is preferred that the carbon block filter is housed in a shell below the chamber that has the sediment filter and the compartment. On the other hand the carbon block may be positioned after the sediment filter such that the sediment filter envelopes the carbon block which is positioned as the innermost part of the compartment. As a preferred feature a microfiltration module is attached to the outlet and is in fluid communication with the carbon block. It is preferred to position the microfiltration module inside a housing to form a microfiltration cartridge.

The microfiltration membrane is selected to surface area in the range 0.05 to 0.5 m² and with a pore size in the range 0.1- 1 micron. It is preferred that the flow of water through the microfiltration cartridge is in the downward direction and in line with the gravity flow.

Carbon block filters are well known in the art. Typical carbon block filters for use in gravity-fed water purification devices include powder activated carbon (PAC) having particle size such that 95 weight % of the particles pass through a sieve of 50 mesh and not more than 12 weight % particles pass through a sieve of 200 mesh. Alternatively one may use a carbon block that includes intermediate activated carbon (IAC) having a particle size such that 95 weight % of the particles pass through a sieve of 35 mesh and not more than 5 weight% particles pass through 60 mesh. The carbon block may be bound using a polymeric binder, preferably having Melt Flow Rate (MFR) of less than 5 units. Flow of water through the carbon block filter may be downwards or radial or radial and upward together through the walls of the carbon block filter and its bottom surface as well. Preferably, water may be made to first flow downwards into an outer shell housing the carbon block filter through an annular space between the shell and the carbon block filter and then water enters radially and through its bottom surface which is in communication with water into the carbon block and exits by upward movement through a hollow passage within the carbon block (against the gravity, also called up-flow). In this case, at the upper end of the carbon block it may have plurality of outlet points through which water overflows out of the carbon block and start collection in the chamber in which it is housed. This chamber is preferably placed beneath the chamber that has the sediment filter and the compartment. Such carbon block filters have been described in WO2004/014803 A1 (Unilever). The carbon block filter may be positioned in a plastic shell or a cage, which has means for its fitment inside the chamber in which it is housed.

When the cartridge of biocide is fixed after the sediment filter, i.e. downstream of the sediment filter, the device may preferably have two carbon blocks. In these cases, a first carbon block is placed immediately after the sediment filter. Thereafter, the water comes in contact with the chemical purification agent. The purification agent then leaches in the water. This water is then allowed to wait for a pre-determined period, after which it is made to pass through the second carbon filter. This filter is called scavenger. It has affinity for chemical by-products emanating from the chemical purification agent. Even when the biocide cartridge is located before sediment filter there could be two carbon filters in series after the sediment filter.

Without wishing to be bound by theory, it is believed that in preferred embodiments of the present invention, the water first contacts the biocide, such as a chlorine dispensing tablet, that helps agglomerate / precipitate most of the inorganic contaminants. A relatively longer sedimentation time reduces particulate load on subsequent filtration processes. After filtration through the sediment filter, there are practically very little particulate impurities that can cause a major drop in flow rate in the next stage of filtration, which could be through a carbon block. Preferred embodiments address the problem of gravity filters in which the carbon block filter chokes quite often, requiring manual intervention for cleaning.

Preferred embodiments of gravity-fed water purification devices provide a comparatively constant flow-rate of about 70-80 ml/minute (of water) when the head-height inside the compartment is around 5 to 50 cm, preferably 5 to 20 cm. While it is preferred that the gravity-fed water purification devices do not include flow control means or siphon to regulate the flow-rate of water; such means may be used. The inventors have observed that when solubility of the chemical purification agent is maintained at 0.1 % to 1.75 %, such flow-control means may not be necessary. In conventional gravity-fed water purification devices, for a precise control on the amount of chemical purification agent that gets dosed, a means for regulating flow-rate of water often becomes necessary. This is because the reducing head-height of water affects the flow rate, and it alters the contact time between the water and chemical purification agent. This may result in fluctuating levels of the amount of the chemical purification agent that gets dosed into the water.

The device and various moulded components may be made of any material such as plastic, glass, composite materials, or metals. The total capacity of the device may be 3 litres to 50 litres. The chamber that has the sediment filter and the compartment may be fitted to any suitably sized top and bottom chambers, to get devices of smaller or bigger sizes. When the chamber has the sediment filter, the compartment and a biocide cartridge, it may be used as a single chamber water purifier and consumers may be asked to use their own top and bottom chambers. This may reduce the cost of the purifier and make it affordable.

The invention will now be explained with the help of figures of a non-limiting preferred embodiment. In the description of the figures, like numerals have been used to represent like features.

### BRIEF DESCRIPTION OF THE FIGURES

Figure-1 is an isometric view of an embodiment of a water purification device showing the components disposed inside the device in a see-through manner.
Figure-2 is a sectional view of the embodiment of figure-1 from a side.
Figure-3 is an enlarged view of a portion of the sectional view of figure-2.
Figure-4 is a partially-cutaway isometric view of the chamber (having the sediment filter and the compartment) of the device of Figure-1.
Figure-5 is the enlarged view of a portion of the isometric view of figure-4.
Figure-6 is a sectional view showing preferred features of the embodiment of figure-1.

### DETAILED DESCRIPTION OF THE FIGURES

Figure-1 is an isometric view of an embodiment of a water purification device showing the components disposed inside the device in a see-through manner. The device 1 has three chambers a top chamber 2, connected to the middle chamber 3, which in turn is connected to the bottom chamber 4. The middle chamber 3 is defined by walls (all four walls represented by common numeral 3a). The middle chamber has an inlet 5, which is inside the middle chamber 3. The sediment filter 6 and the compartment (defined by a coaxial wall) 7 can be seen inside the middle chamber 3.

Referring now to figure-2, a sectional view of the embodiment of figure-1 from a side can be seen. The inlet 5 of the middle chamber 3 is in the form of a pipe. The sediment filter 6 is mounted on a cage (not represented by any numeral in this view). The sediment filter is in fluid communication with the inlet 5 and outlet (not seen in this view), and is located between the inlet 5 and the outlet. The sediment filter 6 is surrounded by the compartment 7 rising upwardly from bottom of the chamber and which is spaced apart from the walls of the chamber to define a space around the compartment. The sediment filter 6 is cylindrical. The compartment 7 defines a circular cross-section. There is an annular space between the walls of the chamber 3 and the compartment 7. This space first fills-up with water, as water enters the chamber 3 from the inlet 5. A cartridge 8 having a water-leachable chemical purification agent is fitted externally to the middle chamber 3, and the outlet of the cartridge is in fluid communication with the inlet 5 of the chamber 3. A carbon block filter 9 is in fluid communication with the sediment filter and is fitted underneath the sediment filter 6 by twist and fit joint. The carbon block filter is housed in the bottom chamber 4. The carbon block filter 9 is in fluid communication with the sediment filter, such that water flows through the carbon block filter after it has flown through the sediment filter 6. The bottom chamber 4 has a tap 10 dispense water.

In use, when a user fills water into the top chamber 2, the water flows out of the top chamber through a suitably designed orifice (not seen in this view) into the cartridge 8. Here it contacts the chemical purification agent. Upon contact, the treated water exits the cartridge 8 and enters the middle chamber 3 through the inlet 5. It then fills up the empty space between the walls of the chamber 3, and the compartment 7. When the water has risen up to the notch on the rim of the compartment (not seen in this view), the water flows into the space around the compartment 7 and the sediment filter 6, and then the process of filtration starts at the lowermost end of the sediment filter 6. Thereafter, the water passes into the carbon block filter 9, which is in fluid communication with the sediment filter 6. The water then comes out of the carbon block filter and collects in the bottom chamber 4. Tap 10 may be opened to dispense water.

Figure-3 is an enlarged view of a portion of the sectional view of figure-2. The sediment filter is fitted inside the middle chamber 3. The air vent pipe is shown by number 11. The sediment filter is housed on a cage 6a.

Figure-4 is a partially-cutaway isometric view of the chamber (having the sediment filter 6 and the compartment 7) of the device of Figure-1, with an attached carbon block filter 9. This view shows the pipe 5a that opens through the opening 5 inside the middle chamber 3. The compartment 7 has the notch 7a. The chamber 3 has a raised platform 12 having an orifice for fluid communication with the cartridge from within the platform. The raised platform 12 is at height higher than the notch 7a, and the overflow aperture 15. The base of the raised platform is flush with the bottom of the chamber 3, and the platform 12 is fused to the wall 3a (this numeral represents all four walls) of the chamber; and it may be one point of contact with the compartment 7. The middle chamber 3 has a float 13. The float prevents overflow of water from the middle chamber 3 by sealing the top chamber orifice whenever water level rises in the middle chamber due to sediment filter choking. Thus , whenever top chamber is not transferring water into middle chamber serves as an indication to consumers that sediment filter requires cleaning.

In such situations, the consumer may wash the sediment filter 6 and reinsert it into the device. Numeral 14 is the outlet of the sediment filter which is connected with middle chamber 3 through which water exits the middle chamber 3 (after having passed through the sediment filter 6), and then enters the carbon block filter 9.

Figure-5 is the enlarged view of a portion of the isometric view of figure-4.

Referring now to figure-6, showing preferred features of the embodiment of figure-1, there is an inlet 5 in chamber 3 in the form of a pipe. The sediment filter is in fluid communication with the inlet 5 and outlet (not seen in this view), and is located between the inlet 5 and the outlet. The sediment filter 6 is surrounded by the compartment 7 with its walls rising upwardly (16) from bottom of the chamber and which is spaced apart from the walls of the chamber to define a space around the compartment. A carbon block 9 is positioned inside the sediment filter 6. The compartment 7 defines a circular cross-section and the rim of the open top (17) has a notch 7a. 7b represents the origin point of the notch which is closest to the inlet 5. The joint between the compartment and the chamber (19) is all along the height of the compartment. There is an annular space between the walls of the chamber 3 and the compartment 7. This space first fills-up with water, as water enters the chamber 3 from the inlet 5. A cartridge 8 having a water-leachable chemical purification agent is fitted externally to the middle chamber 3, and the outlet of the cartridge is in fluid communication with the inlet 5 of the chamber 3. The carbon block filter 9 is in fluid communication with the sediment filter, such that water flows through the carbon block filter after it has flown through the sediment filter 6. A microfiltration cartridge (20) is fitted to outlet of the carbon block. In such a configuration the water flow will be as indicated by the arrows and will ensure maximum time lapse between the addition of the biocide and the time the water flows over the notch to pass through the sediment filter followed by the carbon block. The provision of the microfiltration cartridge is an additional provision to ensure complete microbiological purity of water.

The invention will now be explained with the help of the following non-limiting examples.

### EXAMPLES

### Example-1: Average flow-rate

In this experiment, water was passed through the device of Figure-1. The total quantity of water that was passed through the device, the number of cycles, and the average flow-rate of water (from the top chamber into the second chamber having the sediment filter) was recorded. The data is presented in Table-1.

**Table-1**

| Cycle No | Total litres of water filtered | Average flow rate, ml/minute |
|---|---|---|
| 1 | 4 | 85 |
| 11 | 44 | 83 |
| 25 | 100 | 88 |
| 29 | 116 | 88 |
| 40 | 160 | 100 |
| 50 | 200 | 93 |
| 61 | 244 | 100 |
| 67 | 268 | 93 |

The data in the table-1 indicates that the flow-rate was fairly constant, and also higher than the preferred level of 70-80 ml/minute, even after 67 cycles.

### Example-2: Comparative evaluation of number of interventions required

The objective of this experiment was to determine how many times would a user need to clean the carbon block filter (i.e. the number of manual interventions) while using a preferred embodiment of the device. The carbon block used in both the control and the device according to the invention were made of activated carbon particle where 95% of the particles had a particle size in the range 60 to 200 mesh. Bothe the devices had a sediment filter and carbon block filter, but the control device was devoid of the compartment which was present in the device according to present invention. The method is as follows.

To simulate a comparatively bad quality of water, the inventors prepared a synthetic "test-water". This test water contained 1000 ppm of Total Dissolved Solids (TDS) consisting of impurities like Iron, Manganese and Aluminium and 15 ppm of Total Suspended solids (TSS), made up through Arizona test dust To measure the flow rate, the test water was filled in the top chambers of each device and allowed to pass through each stage of the purification process, and finally collected in the bottom chambers. The time taken for the collection of water in the bottom chamber was recorded for a given volume of water, to calculate the flow rate. When the flow rate fell below 35 to 40 ml/minute, the carbon block filters were back-washed for restoring the flow-rate. Each backwash was considered to be one intervention. The data is shown in table-2.

**Table-2**

| | Carbon filter particle size | Quantity of water filtered/Liters | Number of intervention s |
|---|---|---|---|
| Prior art device | 60 to 200 mesh 95 % | 1500 | 24 |
| Preferred embodiment (Fig-1) | 60 to 200 mesh 95 % | 1500 | Nil |

The data in table-2 indicates that known water purifiers (devoid of the compartment surrounding the sediment filter) required significantly large interventions while the device as described in Figure-1 did not require a single intervention even after 1500 litres of water had passed through.

### Example-3: Comparative evaluation of devices with and without the compartment-flow rates of water

The objective of this experiment was to determine how the presence of the compartment surrounding the sediment filter affects the flow-rate of water. A preferred embodiment of the device was compared against another device having same dimensions and elements. The comparative device did not have the compartment surrounding the sediment filter. Preferred embodiments had the sediment filter and the compartment in the middle chambers. Two experiments were conducted, one using a sediment filter of with surface area 300 cm² (same filter used in both experiments) and the other using a sediment filter of surface area 1000 cm² (same filter used in both experiments). The synthetic test-water that was used for Example-2 was also used here. The data is shown in table-3.

In this experiment a stack all three chambers top, middle and bottom were assembled. Water was added at the top chamber and allowed to pass through the full system. Flow rate of water collected in the bottom chamber was measured when (1) top chamber had brimful water about 110-130 mm head (2) when top chamber water fell to mid height 55-65 mm head and when top chamber water head fell to 25-30 mm head.

**Table-3**

| Device details | Preferred embodiment with filter surface area of 300 cm² | | Prior-art device with filter surface area of 300 cm² | |
|---|---|---|---|---|
| | Flow-rate ml / min | Average, ml / min | Flow-rate, ml / min | Average, ml / min |
| Top chamber full Head 110-130 mm | 93 | | 70 | |
| Top chamber ½ full Head 55-65 mm | 70 | 71 | 57 | 55 |
| Top chamber head 25-35 mm | 50 | | 37 | |

| | Preferred embodiment with filter surface area of 1000 cm² | | Prior-art device with filter surface area of 1000 cm² | |
|---|---|---|---|---|
| Top chamber full Head 110-130 mm | 93 | | 78 | |
| Top chamber ½ full Head 55-65 mm | 76 | 76 | 66 | 64 |
| Top chamber head 25-35 mm | 58 | | 48 | |

The data in table-3 indicates that preferred embodiments provide comparatively higher flow-rate.

### Example-4: Microbiological purity of water by using a preferred device

To test the efficacy of a preferred device (device of figure-1) in providing microbiologically safe drinking water, a test-water spiked with *Klebsiella terrigena* (a bacteria), MS2 Bacteriophage (a virus), and cysts was prepared. A tablet of a chlorine based chemical purification agent was used in the cartridge. The concentration of chlorine in the water was kept at 1.78 ppm (parts per million). The amount of microbes in input water was determined by well-known analytical method. The same method was used to determine the amount of microbes in the water that was dispensed from the tap (output water). Difference between the amounts of microbes (i.e. the log reduction) indicated the efficacy of the device. Results are shown in table-4.

**Table-4**

| | input log | output log | log reduction |
|---|---|---|---|
| *K. terrigena* (cfu/100 ml) | 7.7 | 0 | 7.7 |
| MS2 Bacteriophage (pfu/ml) | 5.07 | 0 | 5.07 |
| Cysts (cyst/L) | 4.67 | 0 | 4.67 |

The data in table-4 indicates that a preferred device provides significantly higher log reduction of bacteria, viruses and cysts.

It will be appreciated that the illustrated examples provide for a water purification device having relatively high and constant flow-rate, and which requires minimum manual intervention.

Preferred embodiments of the invention help provide:
(i) moderately high rate of filtration which is sustained even after filtering large amounts of water
(ii) efficient pre-filtration system which provides sufficient time for sedimentation of impurities and thereby helps reduce the load on the filters in subsequent filtration processes; and,
(iii) comparatively constant flow-rate without any major manual cleaning
(iv) large residence time for the chemical purification agent to act on the pathogens which is achieved by means of the notch in the compartment.

It should be understood that the specific forms of the invention herein illustrated and described are intended to be representative only as certain changes may be made therein without departing from the clear teachings of the disclosure.

Although the invention has been described with reference to specific embodiments, it will be appreciated by those skilled in the art that the invention may be embodied in many other forms.

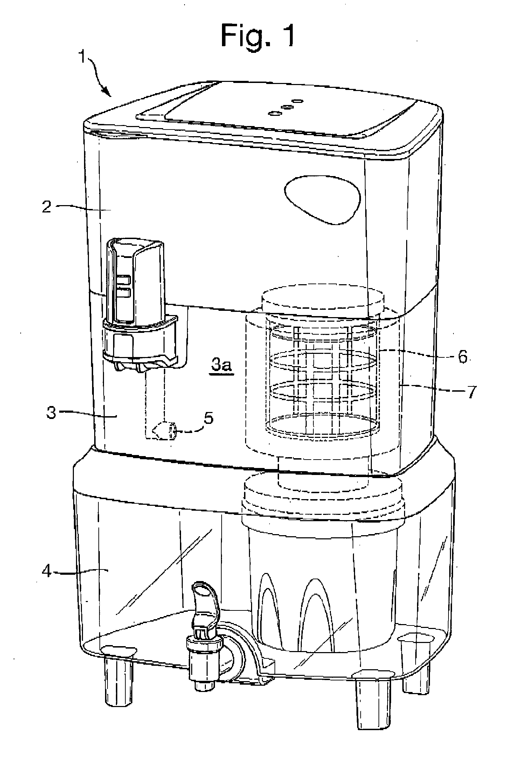

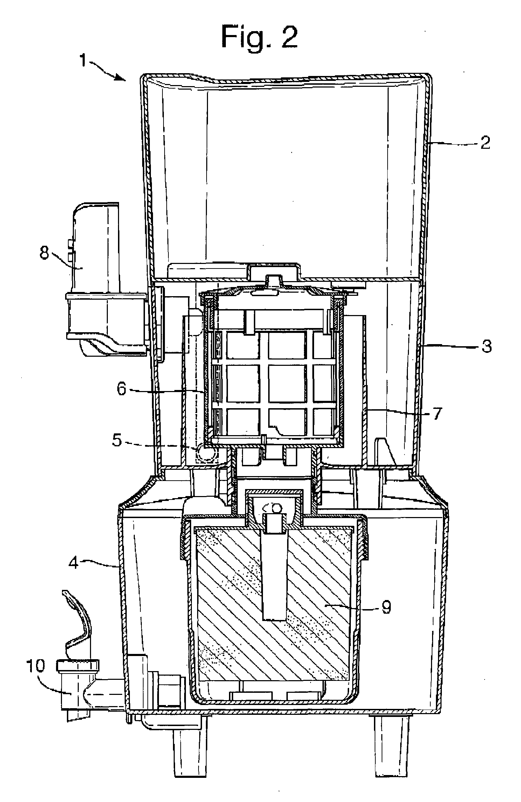

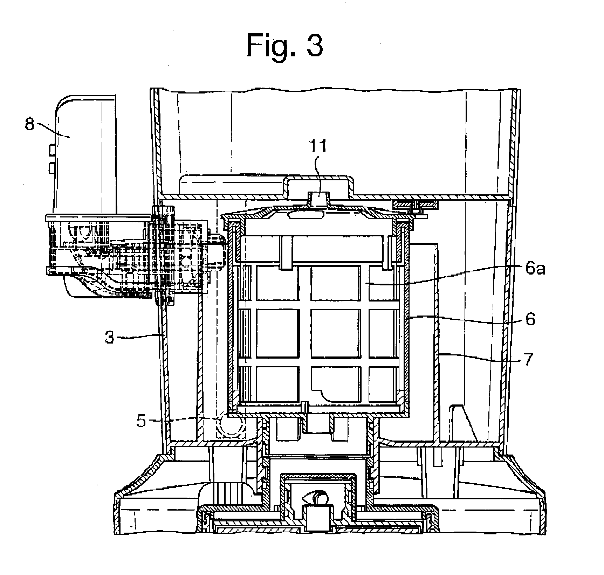

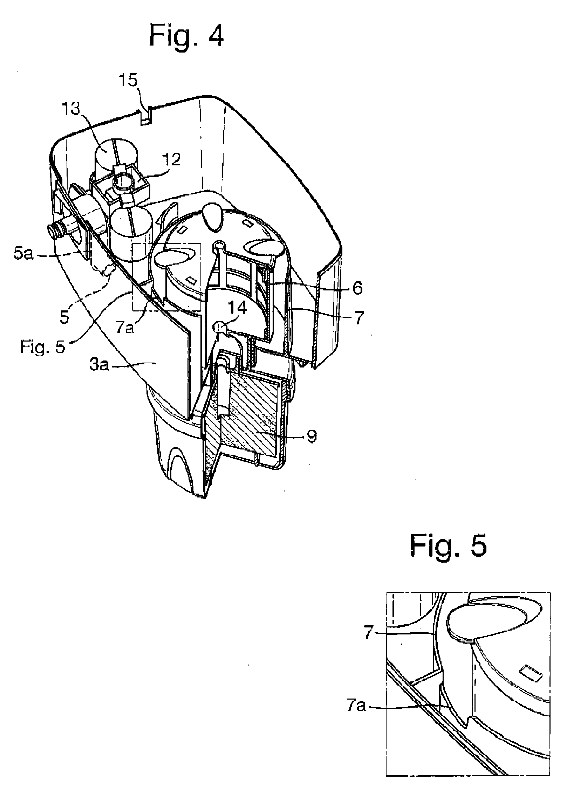

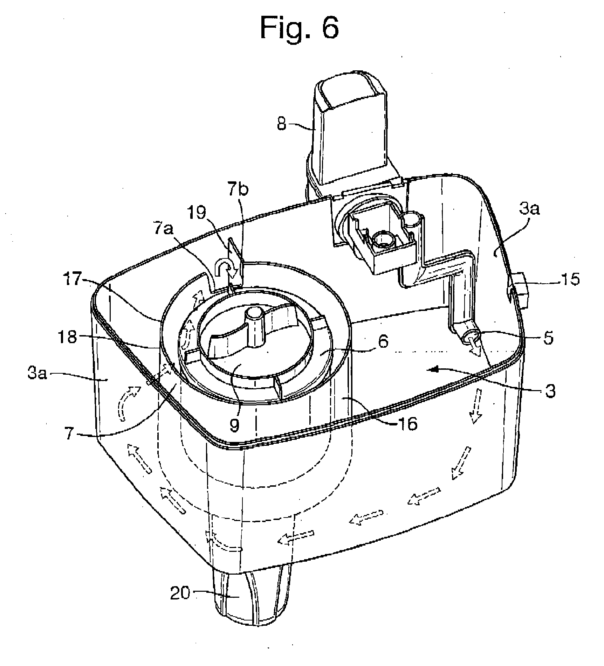

## Claims

1. A water purification device (1) comprising a chamber (3) defined by walls (3a), said chamber having:
(i) an inlet (5);
(ii) an outlet (14); and,
(iii) a sediment filter (6) in fluid communication with said inlet (5) and outlet (14) and located therebetween;
wherein said sediment filter (6) is surrounded by
(iv) a compartment (7) having sidewalls (16) rising upwardly from bottom of the chamber (3) to define an open top (17) with a rim (18), said compartment (7) being spaced apart from the walls (3a) of the chamber (3) to define a space around said compartment (7);
**characterised in that** the rim (18) of the open top (17) of the compartment (7) comprises a notch (7a).

2. A water purification device as claimed in claim 1 wherein the compartment (7) is fused (19) with the wall (3a) of the chamber (3) along the height of the compartment (7).

3. A water purification device as claimed in claim 1 or claim 2 wherein the compartment (7) is fused with the wall (3a) of the chamber (3) along the height of the compartment (7) at the origin point of the notch (7b) closest to the inlet (5).

4. A water purification device as claimed in any one of claims 1 to 3 wherein a cartridge (8) comprising an inlet and an outlet, and housing a water-leachable chemical purification agent, fitted to a wall (3a) of the chamber (3), and the outlet of said cartridge (8) is in fluid communication with said chamber (3).

5. A water purification device as claimed in any one of claim 1 or 4 wherein a wall (3a) of the chamber (3) has an overflow aperture (15) which is positioned above said notch (7a).

6. A water purification device as claimed in claim 5 comprising a raised platform (12), said platform having a water collection tray and an orifice for fluid communication with said cartridge from within the platform, where said raised platform:
(i) is at height higher than said notch and the overflow aperture (15);
(ii) has its base flush with the bottom of the chamber;
(iii) is fused to a wall of the chamber (3a); and,
(iv) has at least one point of contact with the compartment (7).

7. A water purification device as claimed in claim 6 wherein the point of contact with the compartment is along the height of the compartment.

8. A water purification device as claimed in any one of claims 4 to7 wherein said cartridge (8) is fitted externally on said wall (3a) of said chamber (3).

9. A water purification device as claimed in any one ofclaims 4 to 8 wherein said wall of the chamber (3a) has an externally disposed socket with an inner coaxial tube in fluid communication with the interior of said chamber (3) and the inlet of said cartridge, where said cartridge is fitted to said socket by means of a complementarily shaped plug; said plug having a coaxial inner orifice that is shaped to receive the inner coaxial tube of said socket.

10. A water purification device as claimed in any one of the preceding claims wherein ratio of height of said compartment (7) to height of said sediment filter (6) is 1:1 to 1.5:1.

11. A water purification device as claimed in any one of the preceding claims wherein ratio of width of said compartment (7) at the widest part of its base to width of said sediment filter (6) at its base is 1:0.1 to 1:0.9.

12. A water purification device as claimed in any one of the preceding claims wherein ratio of width of said rim (18) to width of said sediment filter (6) at its top is 1:0.05 to 1:0.9.

13. A water purification device as claimed in any one of the preceding claims comprising a carbon block filter in fluid communication with said sediment filter (6), such that water flows through said carbon block (9) filter after it has flown through said sediment filter (6).

14. A water purification device as claimed in claim 13 wherein a microfiltration module (20) is in fluid communication with the carbon block (9).

## Patentansprüche

1. Wasserreinigungsvorrichtung (1), die eine Kammer (3) umfasst, die durch Wände (3a) definiert ist, wobei die Kammer Folgendes besitzt:
(i) einen Einlass (5);
(ii) einen Auslass (14); und
(iii) einen Sedimentfilter (6), der in Fluidkommunikation mit dem Einlass (5) und dem Auslass (14) steht und zwischen diesen platziert ist;
wobei der Sedimentfilter (6) umgeben ist von:
(iv) einem Fach (7) mit Seitenwänden (16), die sich von dem Boden der Kammer (3) erheben, um eine offene Oberseite (17) mit einem Rand (18) zu definieren, wobei das Fach (7) von den Wänden (3a) der Kammer (3) räumlich getrennt ist, um einen Zwischenraum um das Fach (7) zu definieren;
**dadurch gekennzeichnet, dass** der Rand (18) der offenen Oberseite (17) des Fachs (7) eine Einkerbung (7a) umfasst.

2. Wasserreinigungsvorrichtung nach Anspruch 1, wobei das Fach (7) mit der Wand (3a) der Kammer (3) entlang der Höhe des Fachs (7) verbunden (19) ist.

3. Wasserreinigungsvorrichtung nach Anspruch 1 oder Anspruch 2, wobei das Fach (7) mit der Wand (3a) der Kammer (3) entlang der Höhe des Fachs (7) bei dem Anfangspunkt der Einkerbung (7b), der dem Einlass (5) am nächsten ist, verbunden ist.

4. Wasserreinigungsvorrichtung nach einem der Ansprüche 1 bis 3, wobei eine Kartusche (8), die einen Einlass und einen Auslass umfasst und ein mit Wasser auswaschbares chemisches Reinigungsmittel aufnimmt, an einer Wand (3a) der Kammer (3) angebracht ist und wobei der Auslass der Kartusche (8) in Fluidkommunikation mit der Kammer (3) ist.

5. Wasserreinigungsvorrichtung nach einem der Ansprüche 1 bis 4, wobei eine Wand (3a) der Kammer (3) eine Überlauföffnung (15) besitzt, die über der Einkerbung (7a) positioniert ist.

6. Wasserreinigungsvorrichtung nach Anspruch 5, die eine erhöhte Plattform (12) umfasst, wobei die Plattform eine Wassersammelwanne und eine Öffnung für Fluidkommunikation mit der Kartusche von innerhalb der Plattform besitzt, wobei die erhöhte Plattform:
(i) auf einer Höhe liegt, die höher ist als die Einkerbung und die Überlauföffnung (15);
(ii) einen Fuß hat, der mit dem Boden der Kammer bündig ist;
(iii) mit einer Wand der Kammer (3a) verbunden ist; und
(iv) mindestens einen Berührungspunkt mit dem Fach (7) besitzt.

7. Wasserreinigungsvorrichtung nach Anspruch 6, wobei der Berührungspunkt mit dem Fach entlang der Höhe des Fachs liegt.

8. Wasserreinigungsvorrichtung nach einem der Ansprüche 4 bis 7, wobei die Kartusche (8) außen an der Wand (3a) der Kammer (3) angebracht ist.

9. Wasserreinigungsvorrichtung nach einem der Ansprüche 4 bis 8, wobei die Wand der Kammer (3a) einen außen angeordneten Sockel mit einem inneren koaxialen Rohr in Fluidkommunikation mit dem Inneren der Kammer (3) und dem Einlass der Kartusche besitzt, wobei die Kartusche an dem Sockel mittels eines komplementär geformten Anschlusses angebracht ist; wobei der Anschluss eine koaxiale innere Öffnung besitzt, die geformt ist, um das innere koaxiale Rohr des Sockels aufzunehmen.

10. Wasserreinigungsvorrichtung nach einem der vorhergehenden Ansprüche, wobei das Verhältnis der Höhe des Fachs (7) zu der Höhe des Sedimentfilters (6) zwischen 1:1 und 1,5:1 liegt.

11. Wasserreinigungsvorrichtung nach einem der vorhergehenden Ansprüche, wobei das Verhältnis der Breite des Fachs (7) an der breitesten Stelle seiner Grundfläche zu der Breite des Sedimentfilters (6) zwischen 1:0,1 und 1:0,9 liegt.

12. Wasserreinigungsvorrichtung nach einem der vorhergehenden Ansprüche, wobei das Verhältnis der Breite des Randes (18) zu der Breite des Sedimentfilters (6) an seinem oberen Ende zwischen 1:0,05 und 1:0,9 liegt.

13. Wasserreinigungsvorrichtung nach einem der vorhergehenden Ansprüche, die einen Kohlenstoffblockfilter in Fluidkommunikation mit dem Sedimentfilter (6) umfasst, so dass Wasser durch den Filter mit dem Kohlenstoffblock (9) fließt, nachdem es durch den Sedimentfilter (6) geflossen ist.

14. Wasserreinigungsvorrichtung nach Anspruch 13, wobei ein Mikrofiltrierungs-Modul (20) in Fluidkommunikation mit dem Kohlenstoffblock (9) ist.

## Revendications

1. Dispositif de purification d'eau (1) comprenant une chambre (3) définie par des parois (3a), ladite chambre ayant :
(i) une entrée (5) ;
(ii) une sortie (14) ; et
(iii) un filtre à sédiments (6) en communication de fluide avec ladite entrée (5) et ladite sortie (14) et positionné entre elles ;
dans lequel ledit filtre à sédiments (6) est entouré par :
(iv) un compartiment (7) ayant des parois latérales (16) remontant à partir du fond de la chambre (3) afin de définir une partie supérieure ouverte (17) avec un rebord (18), ledit compartiment (7) étant éloigné des parois (3a) de la chambre (3) afin de définir un espace autour dudit compartiment (7) ;
**caractérisé en ce que** le rebord (18) de la partie supérieure ouverte (17) du compartiment (7) comprend une encoche (7a).

2. Dispositif de purification d'eau selon la revendication 1, dans lequel le compartiment (7) est fondu (19) avec la paroi (3a) de la chambre (3) le long de la hauteur du compartiment (7).

3. Dispositif de purification d'eau selon la revendication 1 ou la revendication 2, dans lequel le compartiment (7) est fusionné avec la paroi (3a) de la chambre (3) le long de la hauteur du compartiment (7) au point d'origine de l'encoche (7b) le plus proche de l'entrée (5).

4. Dispositif de purification d'eau selon l'une quelconque des revendications 1 à 3, dans lequel une cartouche (8) ayant une entrée et une sortie, et logeant un agent de purification chimique lixiviable dans l'eau, montée sur une paroi (3a) de la chambre (3) et la sortie de ladite cartouche (8) est en communication de fluide avec ladite chambre (3).

5. Dispositif de purification d'eau selon l'une quelconque des revendications 1 à 4, dans lequel une paroi (3a) de la chambre (3) a une ouverture de trop-plein (15) qui est positionnée au-dessus de ladite encoche (7a).

6. Dispositif de purification d'eau selon la revendication 5, comprenant une plateforme relevée (12), ladite plateforme ayant un plateau de collecte d'eau et un orifice pour la communication de fluide avec ladite cartouche depuis l'intérieur de la plateforme, où ladite plateforme relevée :
(i) est à une hauteur supérieure à ladite encoche et l'ouverture de trop-plein (15) ;
(ii) a sa base de niveau avec le fond de la chambre ;
(iii) est fusionnée sur une paroi de la chambre (3a) ; et
(iv) a au moins un point de contact avec le compartiment (7).

7. Dispositif de purification d'eau selon la revendication 6, dans lequel le point de contact avec le compartiment est le long de la hauteur du compartiment.

8. Dispositif de purification d'eau selon l'une quelconque des revendications 4 à 7, dans lequel ladite cartouche (8) est montée extérieurement sur ladite paroi (3a) de ladite chambre (3).

9. Dispositif de purification d'eau selon l'une quelconque des revendications 4 à 8, dans lequel ladite paroi de la chambre (3a) a une douille disposée extérieurement avec un tube coaxial interne en communication de fluide avec l'intérieur de ladite chambre (3) et l'entrée de ladite cartouche, où ladite cartouche est montée sur ladite douille au moyen d'un bouchon de forme complémentaire ; ledit bouchon ayant un orifice interne coaxial qui est formé pour recevoir le tube coaxial interne de ladite douille.

10. Dispositif de purification d'eau selon l'une quelconque des revendications précédentes, dans lequel le rapport de hauteur dudit compartiment (7) sur la hauteur dudit filtre à sédiments (6) est de 1:1 à 1, 5:1.

11. Dispositif de purification d'eau selon l'une quelconque des revendications précédentes, dans lequel le rapport de largeur dudit compartiment (7) au niveau de la partie la plus large de sa base sur la largeur dudit filtre à sédiments (6) au niveau de sa base est de 1:0,1 à 1:0,9.

12. Dispositif de purification d'eau selon l'une quelconque des revendications précédentes, dans lequel le rapport de largeur dudit rebord (18) sur la largeur dudit filtre à sédiments (6) au niveau de sa partie supérieure est de 1:0,05 à 1:0,9.

13. Dispositif de purification d'eau selon l'une quelconque des revendications précédentes, comprenant un filtre de bloc de carbone en communication de fluide avec ledit filtre à sédiments (6), de sorte que l'eau s'écoule à travers ledit filtre de bloc de carbone (9) après qu'elle s'est écoulée par ledit filtre à sédiments (6).

14. Dispositif de purification d'eau selon la revendication 13, dans lequel un module de microfiltration (20) est en communication de filtre avec le bloc de carbone (9).
